# EUROPÄISCHE PATENTSCHRIFT

(11) **EP 0 916 700 B1**
(45) Veröffentlichungstag und Bekanntmachung des Hinweises auf die Patenterteilung: **06.06.2001**
(21) Anmeldenummer: 98121056.0
(22) Anmeldetag: 06.11.1998
(51) Int. Cl.: C08L 23/00, C08L 91/00, C08F 210/16, C08F 10/00, C08F 10/02

(54) **Verwendung von Polyolefinwachsen in lösemittelhaltigen Pasten**
Use of polyolefin waxes in solvent-containing pastes
Utilisantion des cires polyoléfiniques dans des pâtes contenant des solvants

(30) Priorität: 15.11.1997 DE 19750663
(43) Veröffentlichungstag der Anmeldung: 19.05.1999
(73) Patentinhaber: Clariant GmbH, 65929 Frankfurt am Main (DE)
(72) Erfinder: Hohner, Gerd Dr., 86368 Gersthofen (DE); Herrmann, Hans-Friedrich Dr., 64521 Gross-Gerau (DE)

(56) Entgegenhaltungen:
- EP-A- 0 321 851
- EP-A- 0 321 852
- EP-A- 0 571 882
- EP-A- 0 719 802
- EP-A- 0 890 619

## Beschreibung

Die Erfindung betrifft Verwendung von lösemittelhaltigen Pasten, welche mittels Metallocenkatalysatoren hergestellte Polyolefinwachse enthalten, als Pflegemittel für Oberflächen.

Polyolefinwachse, insbesondere Polyethylenwachse, finden verbreitet Verwendung als Rezeptierungskomponente zur Herstellung lösemittelhaltiger Pasten für den Einsatz beispielsweise in der Fußboden-, Auto- und Schuhpflege (vgl. Ullmann's Encyclopedia of Industrial Chemistry, 5. Aufl., Vol. A 28, S. 108, 153, 156, Weinheim 1996). Wachspasten entstehen durch Erkaltenlassen heißer Wachslösungen in organischen Lösemitteln. Die Pastenform ermöglicht eine einfache Applikation der Wachse: Nach mechanischem Verteilen der Paste auf der zu behandelnden Oberfläche verdunstet das Lösemittel, und es bleibt ein schützender, pflegender oder anderweitig wirksamer Wachsfilm zurück.

Zur Rezeptierung von Polyolefinwachs enthaltenden Pasten werden in der Regel weitere Wachse wie z. B. Tafelparaffine, Mikrowachse, Carnauba- oder teilverseifte und/oder unverseifte Montanwachsraffinate eingesetzt, weiterhin zur Feinabstimmung Hilfsstoffe wie Metallstearate. Als Lösemittel werden üblicherweise Kohlenwasserstoffe wie z.B. aromatenhaltige oder aromatenfreie Benzine oder Terpentinöl verwendet.

Als qualitätsbestimmende Eigenschaft solcher Pasten gilt, neben Oberflächenbeschaffenheit (Glanz) und Wärmestabilität, ihre Konsistenz (vgl. hierzu: Seifen-Öle-Fette-Wachse, Nr.20/1957, S. 595). Meßgröße für letztere ist in der Regel die sog. Pastenhärte, mit der die Belastbarkeit des Pastenkörpers bestimmt wird. Als Qualitätskriterium gilt dabei sowohl die Pastenhärte des reinen Wachses ("Lösemittelaufnahme") als auch diejenige von praxisnah rezeptierten Mischungen mit weiteren, weniger gut pastenbildenden Wachskomponenten ("Pastenbildefähigkeit"). Von entscheidender Bedeutung für die Beurteilung ist auch die Abhängigkeit der Pastenhärte von der Temperatur und der Lagerzeit.

Als Polyolefinwachskomponente bei der Pastenrezeptierung dienen in erster Linie Polyethylenwachse, insbesondere solche, die Seitenkettenverzweigungen enthalten. Derartige Wachse können durch thermischen Abbau verzweigter hochpolymerer Polyethylen-Kunststoffe oder durch direkte Polymerisation von Ethylen hergestellt werden. Als Polymerisationsverfahren kommen beispielsweise Hochdrucktechnologien in Frage, wobei Ethylen bei hohen Drucken und Temperaturen radikalisch zu verzweigten Wachsen umgesetzt wird, daneben Niederdruck- bzw. Zieglerverfahren, bei denen Ethylen mit Hilfe metallorganischer Katalysatoren bei vergleichsweise geringen Drucken und Temperaturen polymerisiert wird. Bei Anwendung des Niederdruckverfahrens werden Verzweigungen in der Regel durch Copolymerisation des Ethylens mit mehr oder weniger großen Anteilen längerkettigen Olefinmonomeren, beispielsweise Propen oder 1-Buten, in die Polyethylenkette eingeführt.

Als Variante des Niederdruckverfahrens ist in neuerer Zeit eine Arbeitsweise bekanntgeworden, bei der als metallorganische Katalysatoren Metallocenverbindungen Verwendung finden. Letztere enthalten Titan-, Zirkonium- oder Hafniumatome als aktive Spezies und werden in der Regel in Kombination mit Cokatalysatoren, z.B. Organoaluminium- oder Borverbindungen, bevorzugt Aluminoxanverbindungen, eingesetzt. Die Polymerisation erfolgt bei Bedarf in Gegenwart von Wasserstoff als Molmassenregler. Metallocenverfahren zeichnen sich dadurch aus, daß im Vergleich zur älteren Zieglertechnologie Wachse mit engerer Molmassenverteilung, gleichmäßigerem Comonomereinbau, niedrigeren Schmelzpunkten und höheren Katalysatorausbeuten erhalten werden können.

Entsprechende, mit Metallocenkatalysatoren arbeitende Polymerisationsverfahren zur Herstellung von Polyolefinwachsen sind z.B. in EP-A-571882 beschrieben.

Es wurde nun gefunden, daß sich Polyolefinwachse, die mit Hilfe von Metallocenkatalysatoren hergestellt wurden, in besonders vorteilhafter Weise für den Einsatz in Pastenrezepturen eignen. So ist die Härte der aus solchen Wachsen hergestellten Pasten im Vergleich mit herkömmlichen Polyethylenwachsen deutlich erhöht. Dies gilt sowohl für die Lösemittelaufnahme als auch die Pastenbildefähigkeit in Mischung mit anderen Wachsen. Auch weisen solche Pasten verbesserte Wärmestabilitäten auf. Da über die Beziehung zwischen der molekularen Struktur von Polyethylenwachsen und ihrer Eignung zur Pastenbildung bisher keinerlei Erkenntnisse vorliegen, waren die gefundenen Ergebnisse völlig überraschend.

Gegenstand der Erfindung ist daher die Verwendung von lösemittelhaltigen Pasten, welche mittels Metallocenkatalysatoren hergestellte Polyolefinwachse enthalten, als Pflegemittel für Oberflächen.

Als Polyolefinwachse kommen Homopolymerisate des Ethylens oder Copolymerisate des Ethylens mit einem oder mehreren 1-Olefinen in Frage. Als 1-Olefine werden lineare oder verzweigte Olefine mit 3-18 C-Atomen, vorzugsweise 3-6 C-Atomen, eingesetzt. Beispiele hierfür sind Propen, 1-Buten, 1-Hexen, 1-Octen oder 1-Octadecen, weiterhin Styrol. Bevorzugt sind Copolymere des Ethylens mit Propen oder 1-Buten. Die Copolymeren bestehen zu 70-99.9, bevorzugt zu 80 - 99 Gew.-% aus Ethylen.

Besonders gut geeignet sind Polyolefinwachse mit einem Tropfpunkt zwischen 90 und 130°C, bevorzugt zwischen 100 und 120°C, einer Schmelviskosität bei 140°C zwischen 10 und 10000 mPa.s, bevorzugt zwischen 50 und 5000 mPa.s und einer Dichte bei 20°C zwischen 0.89 und 0.96 cm3/g, bevorzugt zwischen 0.91 und 0.94 cm3/g.

Metallocenkalysatoren zur Herstellung der Polyolefinwachse sind chirale oder nichtchirale Übergangsmetallverbindungen der Formel M1Lx. Die Übergangsmetallverbindung M1Lx enthält mindestens ein Metallzentralatom M1, an das mindestens ein π-Ligand L, z.B. ein Cyclopentadienylligand gebunden ist. Darüber hinaus können Substituenten, wie z.B. Halogen-, Alkyl-, Alkoxy- oder Arylgruppen an das Metallzentralatom M1 gebunden sein. M1 ist bevorzugt ein Element der III., IV., V. oder VI. Hauptgruppe des Periodensystems der Elemente, wie Ti, Zr oder Hf. Unter Cyclopentadienylligand sind unsubstituierte Cyclopentadienylreste und substituierte Cyclopentadienylreste wie Methylcyclopentadienyl-, Indenyl-, 2-Methylindenyl-, 2-Methylbenzindenyl-, 2-Methyl-4-phenylindenyl-, Tetrahydroindenyl- oder Octahydrofluorenylreste zu verstehen. Die π-Liganden können verbrückt oder unverbrückt sein, wobei einfache und mehrfache Verbrückungen - auch über Ringsysteme - möglich sind. Die Bezeichnung Metallocen umfaßt auch Verbindungen mit mehr als einem Metallocenfragment, sogenannte mehrkernige Metallocene. Diese können beliebige Substitutionsmuster und Verbrückungsvarianten aufweisen. Die einzelnen Metallocenfragmente solcher mehrkernigen Metallocene können sowohl gleichartig als auch voneinander verschieden sein. Beispiele für solche mehrkemigen Metallocene sind z.B. beschrieben in EP-A-632 063.

Beispiele für allgemeine Strukturformeln von Metallocenen sowie für deren Aktivierung mit einem Cokatalysator sind u.a. in EP-A-571 882 gegeben.

Die Erfindung wird durch die folgenden Beispiele erläutert, ohne auf diese Beispiele eingeschränkt zu sein.

Die Schmelzviskositäten der nachfolgend beschriebenen Wachse wurden mit einem Rotationsviskosimeter entsprechend DGF-M-III 8 (57), die Tropfpunkte entsprechend DGF-M-III 3 (75) (Normen der Deutschen Gesellschaft für Fettwissenschaft), die Dichten entsprechend DIN 53479 ermittelt. Die Messung der Pastenhärten wurde nach einer in Seifen-Öle-Fette-Wachse, Nr.20/1957, S. 595 angegebenen Methode vorgenommen.

### Beispiele:

Für die Prüfung in Pastenrezepturen wurden folgende Polyethylenwachse eingesetzt:

**Tabelle 1**

| | Herstellverfahren/Katalysator | Schmelzviskosität/140°C mPa.s | Tropfpunkt °C | Dichte g/cm3 |
|---|---|---|---|---|
| Wachsmuster 1 | Niederdruckpolymerisation/Metallocen | 680 | 107 | 0.930 |
| Wachsmuster 2 | Niederdruckpolymerisation/Metallocen | 610 | 109 | 0.935 |
| Wachsmuster 3 | Niederdruckpolymerisation/Metallocen | 540 | 111 | 0.939 |
| Wachsmuster 4 | Niederdruckpolymerisation/Metallocen | 660 | 109 | 0.932 |
| Wachsmuster 5 | Niederdruckpolymerisation/Metallocen | 520 | 110 | 0.932 |
| Wachsmuster 6 | Niederdruckpolymerisation/Metallocen | 610 | 108 | 0.935 |
| Vergleichsmuster 1 | Niederdruckpolymerisation nach Ziegler | 600 | 119 | 0.930 |
| Vergleichsmuster 2 | Hochdruckpolymerisation | 380 | 106 | 0.925 |
| Vergleichsmuster 3 | Hochdruckpolymerisation | 650 | 107 | 0.926 |
| Vergleichsmuster 4 | Hochdruckpolymerisation | 350 | 105 | 0.930 |

Die Wachsmuster 1 bis 6 wurden durch Ethylen-Propylen-Copolymerisation mit Hilfe von Metallocenkatalysatoren nach den in EP-A-571882 angegebenen Arbeitsvorschriften hergestellt.

### Beispiele 1, 2; Vergleichsbeispiele 1, 2: Lösemittelaufnahme

20 Teile Prüfwachs werden aufgeschmolzen und auf eine Temperatur von ca. 130°C gebracht. 80 Teile auf 100°C erwärmtes Testbenzin (Siedebereich 140-180°C) werden unter Rühren in die Wachsschmelze eingegossen. Man läßt die Wachslösung unter fortgesetztem Rühren auf eine Temperatur 2° oberhalb des Erstarrungspunktes des Prüfwachses (gemessen am rotierenden Thermometer nach DIN 51556) abkühlen und vergießt den Ansatz in einem Kühlschrank mit Bodenkühlung bei 16°C in eine Blechdose. Man läßt 20 min abkühlen und mißt nach 24 stündiger Lagerung bei 23°C die Pastenhärte.

**Tabelle 2**

| | Beispiel 1 | Beispiel 2 | Vergleichsbeispiel 1 | Vergleichsbeispiel 2 |
|---|---|---|---|---|
| Prüfwachs | Wachsmuster 1 (Metallocenwachs) | Wachsmuster 2 (Metallocenwachs) | Vergleichsmuster 1 (Zieglerwachs) | Vergleichsmuster 2 (Hochdruckwachs) |
| Pastenhärte (g/cm2) | | | | |
| | 2890 | 1750 | 1240 | 770 |
| Gemessen bei 20°C | | | | |
| | 1660 | 1040 | 510 | 350 |
| Gemessen nach Lagerung (1 Tag bei 40°C) | | | | |

Die Beispiele zeigen die Überlegenheit von Metallocenwachsen gegenüber herkömmlich durch Nieder- oder Hochdruckpolymerisation hergestellten Produkten. Dies gilt sowohl für die bei Normaltemperatur als auch für die nach Lagerung bei erhöhter Temperatur gemessenen Pastenhärten.

### Beispiele 3,4, Vergleichsbeispiele 3,4: Prüfung der Pasteneigenschaften in einer praxisnahen Rezeptur

**Tabelle 3**

| Rezeptur (Angaben in Gew.-%): | |
|---|---|
| Bestandteil | Gew.-% |
| Hoechst-Wachs X 55 (teilverseiftes Esterwachs auf Montanwachsbasis) | 8.5 |
| Hoechst-Wachs KSL (Esterwachs auf Montanwachsbasis) | 1.5 |
| Hoechst-Wachs RT (Esterwachs auf Montanwachsbasis) | 1.0 |
| Tafelparaffin 52/54 | 20.0 |
| Prüfwachs | 2.0 |
| Ca-Stearat | 3.0 |
| Testbenzin | 64.0 |
| | 100.0 |

Die Arbeitsweise zur Herstellung der Pasten ist analog wie für die Beispiele 1 und 2 beschrieben.

**Tabelle 4**

| Ergebnisse: | | | | |
|---|---|---|---|---|
| | Beispiel 3 | Beispiel 4 | Vergleichsbeispiel 3 | Vergleichsbeispiel 4 |
| Prüfwachs | Wachsmuster 1 (Metallocenwachs) | Wachsmuster 2 (Metallocenwachs) | Vergleichsmuster 1 (Zieglerwachs) | Vergleichs-Muster 3 (Hochdruckwachs) |
| Oberfläche | Spiegelglanz | Hochglanz | Hochglanz | Hochglanz |
| Pastenhärte (g/cm2) | | | | |
| | 2490 | 2070 | 1770 | 1850 |
| gemessen bei 20°C | | | | |
| | | | | |
| gemessen nach Lagerung (1 Tag bei 40°C) | 320 | 270 | 200 | 220 |

### Beispiele 5, 6, Vergleichsbeispiel 5: Prüfung der Pasteneigenschaften in einer hart eingestellten Schuhcremerezeptur

**Tabelle 5**

| Rezeptur (Angaben in Gew.-%): | |
|---|---|
| Bestandteil | Gew.-% |
| Hoechst-Wachs O (teilverseiftes Esterwachs auf Montanwachsbasis) | 9.0 |
| Hoechst-Wachs E (Esterwachs auf Montanwachsbasis) | 3.0 |
| Hoechst-Wachs LP (Säurewachs auf Montanwachsbasis) | 1.8 |
| plastisches Mikrowachs (Ozokerit) | 1.8 |
| Tafelparaffin 60/62 | 9.0 |

| Bestandteil | Gew.-% |
|---|---|
| Prüfwachs | 1.8 |
| Ca-Stearat | 1.5 |
| Testbenzin | 72.1 |
| | 100.0 |

Die Arbeitsweise zur Herstellung der Pasten ist analog wie für die Beispiele 1 und 2 beschrieben.

**Tabelle 6**

| Ergebnisse: | | | |
|---|---|---|---|
| | Beispiel 5 | Beispiel 6 | Vergleichsbeispiel 5 |
| Prüfwachs | Wachsmuster 3 (Metallocenwachs) | Wachsmuster 4 (Metallocenwachs) | Vergleichsmuster 1 (Zieglerwachs) |
| Pastenhärte | | | |
| (g/cm2) | 2090 | 2335 | 1308 |
| gemessen | | | |
| bei 20°C | | | |
| | | | |
| gemessen | 790 | 997 | 509 |
| nach | 300 | 385 | 183 |
| Lagerung: | | | |
| 2 h/30°C | | | |
| 2 h/40°C | | | |

### Beispiele 7-10, Vergleichsbeispiele 6, 7: Prüfung der Pasteneigenschaften in einer preisgünstigen Bohnerwachszeptur

**Tabelle 7**

| Rezeptur (Angaben in Gew.-%) | |
|---|---|
| Bestandteile | Gew.-% |
| Hoechst-Wachs OP (teilverseiftes Esterwachs auf Montanwachsbasis) | 1.5 |
| Prüfwachs | 3.5 |
| hydriertes Rizinusöl | 1.0 |
| Paraffin 60/62 | 19.0 |
| Testbenzin | 75.0 |
| | 100.0 |

Die Arbeitsweise zur Herstellung der Pasten ist analog wie für die Beispiele 1 und 2 beschrieben.

**Tabelle 8**

| Ergebnisse: | | | | | | |
|---|---|---|---|---|---|---|
| | Beispiel 7 | Beispiel 8 | Beispiel 9 | Beispiel 10 | Vergleichsbeispiel 6 | Vergleichsbeispiel 7 |
| Prüfwachs | Wachsmuster 3 (Metallocenwachs) | Wachsmuster 4 (Metallocenwachs) | Wachsmuster 5 (Metallocenwachs) | Wachsmuster 6 (Metallocenwachs) | Vergleichsmuster 1 (Zieglerwachs) | Vergleichsmuster 4 (Hochdruckwachs) |
| Pastenhärte | | | | | | |
| (g/cm2) | | | | | | |
| | 3090 | 2770 | 2105 | 1753 | 1466 | 1534 |
| Gemessen bei | | | | | | |
| 20°C | | | | | | |
| | | | | | | |
| Gemessen nach | 1236 | 1320 | 932 | 740 | 570 | 805 |
| Lagerung: | 300 | 188 | 154 | 250 | <120 | <120 |
| 2 h/30°C | | | | | | |
| 2 h/40°C | | | | | | |

## Patentansprüche

1. Verwendung von lösemittelhaltigen Pasten, welche mittels Metallocenkatalysatoren hergestellte Polyolefinwachse enthalten, als Pflegemittel für Oberflächen.

2. Verwendung nach Anspruch 1, dadurch gekennzeichnet, daß Ethylencopolymerwachse, enthaltend 0.1-30 Gew.-% eines oder mehrerer 1-Olefine mit einer Kettenlänge von 3 bis 18 C-Atomen eingesetzt werden.

3. Verwendung nach Anspruch 2, dadurch gekennzeichnet, daß die 1-Olefine eine Kettenlänge von 3 bis 6 C-Atomen aufweisen.

4. Verwendung nach den Ansprüchen 1 bis 3, dadurch gekennzeichnet, daß Copolymerwachse des Ethylens mit 0.1-30 Gew.-% Propen oder 1-Buten eingesetzt werden.

5. Verwendung nach den Ansprüchen 1 bis 4, dadurch gekennzeichnet, daß die Polyolefinwachse einen Tropfpunkt zwischen 90 und 130°C und eine Schmelzviskosität bei 140°C zwischen 10 und 10000 mPa.s aufweisen.

## Claims

1. The use of a solvent-containing paste which comprises a polyolefin wax prepared by means of a metallocene catalyst as a polish composition for surfaces.

2. The use as claimed in claim 1, wherein an ethylene copolymer wax comprising 0.1-30% by weight of one or more 1-olefins having a chain length of 3 to 18 carbon atoms is employed.

3. The use as claimed in claim 2, wherein the 1-olefins have a chain length of 3 to 6 carbon atoms.

4. The use as claimed in claims 1 to 3, wherein a copolymer wax of ethylene with 0.1-30% by weight of propene or 1-butane is employed.

5. The use as claimed in claims 1 to 4, wherein the polyolefin wax has a drop point of between 90 and 130°C and a melt viscosity at 140°C of between 10 and 10,000 mPa.s

## Revendications

1. Utilisation de pâtes contenant des solvants, qui contiennent des cires polyoléfiniques préparées au moyen de catalyseurs métallocène, comme produit d'entretien de surfaces.

2. Utilisation selon la revendication 1, caractérisée en ce que les cires de copolymère d'éthylène, contenant de 0,1 à 30% en poids d'une ou de plusieurs 1-oléfines sont utilisées avec une longueur de chaîne de 3 à 18 atomes de carbone.

3. Utilisation selon la revendication 2, caractérisée en ce que les 1-oléfines présentent une longueur de chaîne de 3 à 6 atomes de carbone.

4. Utilisation selon les revendications 1 à 3, caractérisée en ce que les cires de copolymère d'éthylène sont employées avec de 0,1 à 30% en poids de propène ou de but-1-ène.

5. Utilisation selon les revendications 1 à 4, caractérisée en ce que les cires polyoléfiniques présentent un point de goutte compris entre 90 et 130°C et une viscosité à l'état fondu à 140°C comprise entre 10 et 10000 mPa·s.
